# EUROPEAN PATENT SPECIFICATION

(11) **EP 0 468 293 B1**
(45) Date of publication and mention of the grant of the patent: **24.09.1997**
(21) Application number: 91111566.5
(22) Date of filing: 11.07.1991
(51) Int. Cl.: C09D 5/38, C09D 133/00, C09D 5/04

(54) **Metallic water borne base coat composition based on acrylic latex resins using a water reducible resin for aluminium storage and a hectorite clay for rheology control**
Wässerige Metallic-Grundierungszusammensetzung auf Basis von Acryl-Latex-Harzen unter Verwendung eines wasserverdünnbaren Harzes als Medium für das Aluminium und Hectorit-Ton zur Rheologie-Regelung
Composition aqueuse de couche de fond métallisée à base de résines latex acryliques utilisant une résine réductible par l'eau comme milieu pour l'aluminium et un argile hectorite pour la régulation de la rhéologie

(30) Priority: 13.07.1990 US 553063; 10.09.1990 US 553065
(43) Date of publication of application: 29.01.1992
(73) Proprietor: BASF Corporation, Clifton, New Jersey 07015-6001 (US)
(72) Inventor: Anderson, James L. Jr., Grand Rapids, Ohio 43522 (US); Finkenauer, Horst J., Pune, India 411004 (IN); Newton, David L., Toledo, Ohio 43613 (US); McClanahan, Craig, Bowling Green, Ohio 43402 (US); Bard, Charles Z., Maumee, Ohio 43537 (US)
(74) Representative: Münch, Volker, Dr.

(56) References cited:
- EP-A- 0 399 427
- US-A- 3 741 922
- US-A- 3 761 432
- US-A- 3 953 644
- US-A- 4 880 673

## Description

### FIELD OF INVENTION

The present invention is concerned with kit compositions for the preparation of water borne coating compositions.

### BACKGROUND AND PRIOR ART

It is customary in the painting of an automobile that a series of coatings be applied to the substrate. The first coat being the primer followed by the base coat and finally the clear coat. The base coat provides the good decorative quality to the final finish via organic and inorganic pigments. In many automobile finishes, a metallic finish is desired. To obtain this metallic effect, metallic pigments are present in the base coat, typically aluminum flakes. The aluminum flakes in the basecoat contribute to the glossy lustrous appearance of the final finish.

Another feature that aluminum flakes contribute to the appearance of the final finish is the change of brightness as the viewing angle is changed. Typically, the final finish is bright when viewed at a 90 degree angle, the coating has a dark appearance. This phenomenom is known as "flop" in the automotive field and is highly desired. The ultimate in "flop" is achieved when the aluminum flakes are orientated parallel to the substrate. Random orientation of the aluminum flake results in a final finish exhibiting bright and dark areas when viewed at 90 degrees. This appearance is known as mottling and detracts from the final appearance of the final finish. In general, the metal fixation in base coats is achieved by a rheology modifiers such as inorganic and organic thickeners. The particular rheology control agent used in this invention results in a non-mottled, high head-on-brightness, outstanding flop, and high quality finish, even in the case of a silver metallic base coat. Also, this rheology control agent allows the coating to be applied wetter during the application process.

In the current market place, automobile coatings, especially base coats, contain a high level of organic solvent. With increasing concern about the volatile organic emissions into the atmosphere, an intensive effort in research and development in coatings containing mainly water as the solvent with a small level of organic solvent is under way. An example of such an effort is U.S. patent No. 4,730,020 which discloses a water-dilutable coating composition comprising specifically selected acrylic copolymers, solvent blends, coloring and/or optical effect pigments and polymer dispersions. To obtain the desired optical effect of the metallic flakes, the correct combination of acrylic copolymer and solvent blend must be achieved. An aqueous thermosetting acrylic resin described by U.S. Patent No. 3,862,071 controls the metallic pigment orientation by the addition of a water insoluble copolymer. Microgel technology as described by GB-PS No. 2,073,609 also results in the proper metal orientation. Also disclosed in DE No. 3,210,051 is an attempt to control metallic pigment orientation using polyurethane dispersions. Cellulosic esters have also been used to control metal fixation as disclosed in DE No 3,216,549. The rheology modifiers or rheology control agents for water borne coatings have poor shelve stability, poor weathering characteristics and are cumbersome to use. The particular rheology control agent used in this invention results in a non-mottled, high head-on-brightness, outstanding flop, and high quality finish, even in the case of a silver metallic base coat and does not suffer from the problems cited earlier.

The use of acrylic latex resin in a base coat formulation has been disclosed in European Application 0 287 144 A1, however, this application does not disclose any rheology control agents, pigment dispersion procedures, method for aluminum storage and requires that the acrylic latex resin be prepared in 2 or more steps by emulsion polymerization.

Typically, coating compositions used in the automotive market, especially in the automotive after market, are produced by mixing various bases to give the desired color. These coating compositions are then applied in about 1-5 days after preparation. A major problem is the introduction of aluminum flakes which react with water to generate hydrogen gas. Therefore, the aluminum flake must be segregated from the rest of the water borne components to minimize this hazard. This invention also describes a method for the storage of aluminum flake in an organic medium with introduction of the flakes into the aqueous environment just prior to application of the coating system.

### SUMMARY OF INVENTION

The present invention relates to kit compositions for the preparation of waterborne coating compositions comprising
A) a slurry of metallic pigment flakes in a solvent borne resin and water miscible solvent(s),
B) an aqueous neutralization base containing a water reducible resin,
C) an aqueous pigmented or unpigmented base containing an acrylic latex resin and,
D) a reducer base containing a rheology control agent excluding a polymeric nonionic fluorocarbon surfactant with a weight average molecular weight of 5,000 to 50,000 containing ethylene oxide linkages and 2 - 25% of fluorine by weight of the surfactant.

The kit compositions according to the present invention can be used for the preparation of waterborne metallic and nonmetallic basecoat coating compositions for the preparation of multicoat systems for the automotive market, especially for the refinish market. The outstanding metal control exhibited by coating compositions prepared by using kit compositions according to the present invention is attributed to the rheology control agent, the film shrinkage of the acrylic latex vehicle while drying and a wax. The use of acrylic latex results in a very fast dry time. These coating compositions provide base coats that satisfy current and proposed volatile organic compound regulations. Even with conventional non-metallic pigments, the coatings exhibit excellent appearance.

This invention describes a method for the storage of aluminum flake in an organic medium with introduction of the flakes into the aqueous environment just prior to application of the coating system. This method minimizes the potential hazard of the aluminum flake reacting with water to form hydrogen gas and dulling of the aluminum flake during storage. This method can also be used for the storage of other water sensitive pigments such as copper and brass. Other pigments such as plastic films, mica and coated metallic foils can be stored using this method.

The automotive base coat paint comprises five components; A) aluminum base, B) neutralization base, C) pigmented and unpigmented base, and D) reducer base. Component A, the aluminum base, is composed of metallic flakes slurried into a solvent borne resin and water miscible solvents. The resin used in this component may be a water reducible acrylic, water reducible polyester, or water reducible alkyd. Commonly used metallic pigments, used singularly or as a mixture are copper, copper alloys, aluminum, steel, mica, plastic films, and coated metallic foils, preferably aluminum at a level of 4-30% by weight, preferably 20-30% by weight. The aluminum base contains 5-35%, preferably 20-30% by weight of the solvent borne water reducible resin. The organic solvent for this base must be water miscible. Examples of solvents are methanol, ethanol, propanol, butanol, N-methylpyrolidone, glycols, glycol ethers, glycol acetates, diethylene glycol ethers, diethylene glycol acetates, propylene glycol ethers, propylene glycol acetates, dipropylene glycol ethers, dipropylene glycol acetates, specially preferred are ethylene glycol propyl ether, ethylene glycol butyl ether, ethylene glycol hexyl ether, propylene methyl ether, propylene ethyl ether, propylene propyl ether, propylene butyl ether, propylene hexyl ether, dipropylene methyl ether, dipropylene ethyl ether, dipropylene propyl ether, and dipropylene butyl ether.

Component A, the aluminum base, has a total solids level of 25-55 by weight, total volatile organic solvent level of 35-50% by weight, total metallic pigment level of 4-30% by weight and total binder level of 5-35% by weight.

By binder we mean the nonvolatile portion of the resinous vehicle of a coating, in particular reference is given to Paint & Coatings Dictonary, Published by The Federation of Societies for Coatings Technology, 1978. By solids we mean the nonvolatile matter in a coating composition left behind after drying, in particular reference is given to Paint & Coatings Dectonary, Published by the Federation of Societies for Coatings Technology, 1978.

Component B, neutralization base, is composed of a solvent borne water reducible resin, neutralized with ammonia or a water soluble primary amines, secondary amines, tertiary amines, polyamines and hydroxyamines, such as ethanolamine, diethanolamine, triethanolamine, n-methylethanol amine, N,N diethylethanolamine, N-aminoethanolamine, N-methyldiethanolamine, monoisopropanolamine, diisopropanolamine, triisopropanolamine, hydroxyamine, butanolamine, hexanolamine, methyl diethanolamine, N,N-diethylaminoethylamine, ethylene diamine, diethylene triamine, diethylene tetraamine, hexamethylene tetramine, triethylamine and the like. The prefered base is ammonia which is dispersed in water to a level of 5-25%, preferably 10-20% by weight. Excess amine, preferably ammonia, is added at a level of 0.1-10%, preferably 5-10%, by weight. The neutralization base has a total ammonia level of 0.1-15% by weight, a total binder level of 5-25% by weight, a total solids level of 5-25% by weight, a total water miscible organic solvent level of 0-20% by weight, a total water level of 40-96% by weight and a pH range of 7.5-10.0.

Component C, pigmented base, contains acrylic latex grinding polymer and acrylic latex film forming vehicle at a level of 5-50%, preferably 15-50%. This level depends on the pigment in the component. The level of pigment in component C is 0.5-35% by weight, this level depends on the pigment characteristics also. Typically, a pigment to binder weight ratio of about 10/100 to 300/100 is acceptable. The pigments are typically ground using conventional dispersion equipment such as sand mills, pearl mills, ball mills, horizonal mills, and vertical mills. Optional wetting agents, surfactants, and dispersing aids can be employed. This component may also contain a wax composed of ethylene and/or ethylenically unsaturated monomers alkyl (meth)acrylates such as methyl (meth)acrylate, ethyl (meth)acrylate, propyl (meth)acrylate, 2-propyl (meth)acrylate, butyl (meth)acrylate, 2-butyl(meth)acrylate, 2-methylpropyl (meth)acrylate, t-butyl (meth)acrylate, 2-ethylhexyl (meth)acrylate, cyclohexyl (meth)acrylate, lauryl (meth)acrylate, octyl (meth)acrylate, decyl (meth)acrylate, stearyl (meth)acrylate, dicyclopentadienyl (meth)acrylate, and isobornyl (meth)acrylate; aryl monomers such as styrene, alphamethyl styrene, vinyl toluene, t-butyl styrene, benzyl (meth) acrylate, and 2-benzylethyl (meth) acrylate; hydroxy monomers such as hydroxyethyl (meth)acrylate, hydroxypropyl (meth)acrylate, hydroxybutyl (meth)acrylate, sec-hydroxybutyl (meth)acrylate, and hydroxyoctyl (meth)acrylate; acid functional monomers such as acrylic acid, methacrylic acid, maleic acid, and itaconic acid. Typically, the particle size of the wax particle in the final dispersion is 0.5 µm (microns) to 50 µm (microns), preferably 1.0 to 20.0 µm (microns). The wax is dispersed by conventional techniques or emulsified in to the resin system to the desired particle size. The proper amount of the wax dispersion is then added to the pigmented base. The pH of the pigmented base can be adjusted using ammonia or any water soluble primary amines, secondary amines, tertiary amines, polyamines and hydroxyamines, such as ethanolamine, diethanolamine, triethanolamine, n-methylethanol amine, N,N diethylethanolamine, N-aminoethanolamine, N-methyldiethanolamine, monoisopropanolamine, diisopropanolamine, triisopropanolamine, hydroxyamine, butanolamine, hexanolamine, methyl diethanolamine, N,N-diethylaminoethylamine, ethylene diamine, diethylene triamine, diethylene tetraamine, hexamethylene tetramine, triethylamine and the like. The prefered base is ammonia. This component may also contain a water dipersible polyurethane resin at a level of 0-25% by weight.

Component C, the pigmented base, has a total solids level of 5-60% by weight, a total pigment level of 0.0-45% by weight, a total organic solvent level of 0-25% by weight, a total binder of 20-60% by weight, a total wax level of 0-20% by weight, a total water level of 40 95% by weight, a pH range of 7-9 and a total water dispersible polyurethane resin at a level of 0-25% by weight.

Component D, reducer base, contains an aqueous solution of; 1) synthetic sodium lithium magnesium silicate hectorite clay at a level of 0.1 to 10% by weight, preferably 0.5 to 3.0% by weight, 2) an anionic surfactant at a level of 0.1 to 2.0% by weight, preferably 0.1 to 1.0% by weight, 3) a polyurethane resin at a level of 0.0 to 25.0% by weight, preferably 0.0 to 10.0% by weight, 4) water miscible solvent at a level of 0-25% by weight and 5) a water level of 50-99.9% by weight. This rheology control agent allows for a drier application of the coating to the substrate.

As an alternative, component D, reducer base, contains an aqueous solution of; 1) synthetic sodium lithium magnesium silicate hectorite clay at a level of 0.1 - 10 % by weight, preferably 0.5 - 3.0 % by weight, 2) a polypropylene glycol at a level of 0.1 - 10 % by weight and 3) water miscible solvent at a level of 0 - 25 % by weight, 4) a total solids level of 0.1 - 20 % by weight and 5) a total water level of 50.0 - - 99.9 % by weight.

### DESCRIPTION OF INVENTION

This invention is directed to kit compositions for the preparation of water borne coating composition especially designed for the automotive market.

This invention describes a method for the introduction of metallic flakes into a water borne coating resulting in a highly superior base coat. The proper metal fixation is accomplished by the use of a novel rheology control agent which employs a synthetic sodium lithium magnesium silicate hetorite clay and a polypropylene glycol. The base coat is broken down into four bases that are combined just prior to application of the base coat.

The invention describes a method for the storage of aluminum flake in an organic medium with introduction of the flakes into the aqueous environment just prior to application of the coating system. This method minimizes the potential hazard of the aluminum flake reacting with water to form hydrogen gas during storage.

Component A, aluminum base, is an aluminum slurry in an organic environment containing either a low to moderate acid number acrylic or polyester or alkyd. The acid number of these polymers based on solids should be about 15 to 65. The preferred polymer is a water reducible solvent borne acrylic modified with glycidyl esters. The acrylic polymer is prepared via normal solution polymerization techniques. The acrylic polymer is composed of; 1) 3-5% by weight of an ethylenically unsaturated carboxylic acid such as methacrylic acid and acrylic acid, preferably methacrylic acid, 2) 15-30% by weight methylmethacrylate, 3) 5-20% by weight 2-ethylhydroxymethacrylate, 4) 1-10% by weight isobornyl methacrylate, and 5) optionally 5-20% by weight of a glycidyl ester of a tertiary C10 fatty acid. The acrylic polymer is prepared in organic solvents that are water miscible, such as methyl ethyl ketone, acetone, ethanol, methanol, propanol, butanol, N-methylpyrolidone, glycols, glycol ethers, glycol acetates, diethylene glycol ethers, diethylene glycol acetates, propylene glycol ethers, propylene glycol acetates, dipropylene glycol ethers, dipropylene glycol acetates, specially preferred are ethylene glycol propyl ether, ethylene glycol butyl ether, ethylene glycol hexyl ether, propylene methyl ether, propylene ethyl ether, propylene propyl ether, propylene butyl ether, propylene hexyl ether, dipropylene methyl ether, dipropylene ethyl ether, dipropylene propyl ether, methyl ethyl ketone and dipropylene butyl ether. Optionally, surfactants can also be present during the polymerization at a level of 0.1-2.0% by weight. The viscosity of the final polymer is 16000 to 18000 mPas (cps) with a solids content of 50-75% by weight, preferably 55-65% by weight. The acid number of the polymer based on solids should be 10-70, preferably 15-65.

Any commercial aluminum paste available for solvent borne or water borne applications can be used in the preparation of component A. The amount of aluminum flake in the component is 4-30% by weight, preferably 23-30% by weight.

Other nonmetallic and metallic pigments that can be incorporated into this base include copper, copper alloys, mica, coated metallic foils, plastic flakes and steel. However, this is not an inclusive list.

Additional organic solvent may be needed to reduce the viscosity of the acrylic resin. Acceptable solvents must be water miscible such as methyl ethyl ketone, acetone, ethanol, methanol, propanol, butanol, N-methylpyrolidone, glycols, glycol ethers, glycol acetates, diethylene glycol ethers, diethylene glycol acetates, propylene glycol ethers, propylene glycol acetates, dipropylene glycol ethers, dipropylene glycol acetates, specially preferred are ethylene glycol propyl ether, ethylene glycol butyl ether, ethylene glycol hexyl ether, propylene methyl ether, propylene ethyl ether, propylene propyl ether, propylene butyl ether, propylene hexyl ether, dipropylene methyl ether, dipropylene ethyl ether, dipropylene propyl ether and dipropylene butyl ether. Component A has a total solids level of 25-55% by weight, 5-35% binder by weight, 35-50% organic solvent by weight and total metallic pigment level of 4-30% by weight. Additional wetting, anti-settling additives common to the paint industry may be added.

The preparation of component A, the aluminum base, is critical for the proper appearance of the aluminum flake in the final coating. The proper amount of the acrylic resin solution is dissolved into the proper amount of water miscible organic solvent, such as methyl ethyl ketone, acetone, ethanol, methanol, propanol, butanol, N-methylpyrolidone, glycols, glycol ethers, glycol acetates, diethylene glycol ethers, diethylene glycol acetates, propylene glycol ethers, propylene glycol acetates, dipropylene glycol ethers, dipropylene glycol acetates, specially preferred are ethylene glycol propyl ether, ethylene glycol butyl ether, ethylene glycol hexyl ether, propylene methyl ether, propylene ethyl ether, propylene propyl ether, propylene butyl ether, propylene hexyl ether, dipropylene methyl ether, dipropylene ethyl ether, dipropylene propyl ether and dipropylene butyl ether. The proper amount of the aluminum paste is slurried into the above described resin solution. The aluminum slurry must be stirred until the base is smooth and uniform.

Component B, neutralization base, is an aqueous solution containing dispersed acrylic resin and ammonia. The acrylic described above is used in the component. Other water reducible resins such as polyester and alkyds may be used. Other water soluble primary amines, secondary amines, tertiary amines, polyamines and hydroxyamines, such as ethanolamine, diethanolamine, triethanolamine, n-methylethanol amine, N,N diethylethanolamine, N-aminoethanolamine, N-methyldiethanolamine, monoisopropanolamine, diisopropanolamine, triisopropanolamine, hydroxyamine, butanolamine, hexanolamine, methyl diethanolamine, N,N-diethylaminoethylamine, ethylene diamine, diethylene triamine, diethylene tetraamine, hexamethylene tetramine, triethylamine and the like.An aqueous solution containing 0.1-15.0%, preferably 0.1-8.0% ammonia by weight is prepared. The correct amount of the acrylic resin, usually 5-25% by weight, preferably 10-20% by weight, is added to the basic aqueous solution and stirred. The resulting solution should be clear to slightly turbid and have a pH range of 7.5-10.0, preferably 8.0 to 10.0. The resulting solution should have a solids range of 5-25% by weight, preferably 10-20%, a binder level of 5-25% by weight, a total water level of 40-96% by weight, and total ammonia level of 0.1-15% by weight. This component may also contain water miscible solvents at a level of 0.0%-20.0% by weight, Examples of such solvents are methyl ethyl ketone, acetone, ethanol, methanol, propanol, butanol, N-methylpyrolidone, glycols, glycol ethers, glycol acetates, diethylene glycol ethers, diethylene glycol acetates, propylene glycol ethers, propylene glycol acetates, dipropylene glycol ethers, dipropylene glycol acetates, specially preferred are ethylene glycol propyl ether, ethylene glycol butyl ether, ethylene glycol hexyl ether, propylene methyl ether, propylene ethyl ether, propylene propyl ether, propylene butyl ether, propylene hexyl ether, dipropylene methyl ether, dipropylene ethyl ether, dipropylene propyl ether and dipropylene butyl ether.

Component C, pigmented base, imparts the coloring effect upon the coating composition. The resin used for the dispersing of the pigments is an acrylic latex. Typical properties of this acrylic latex are as follows:

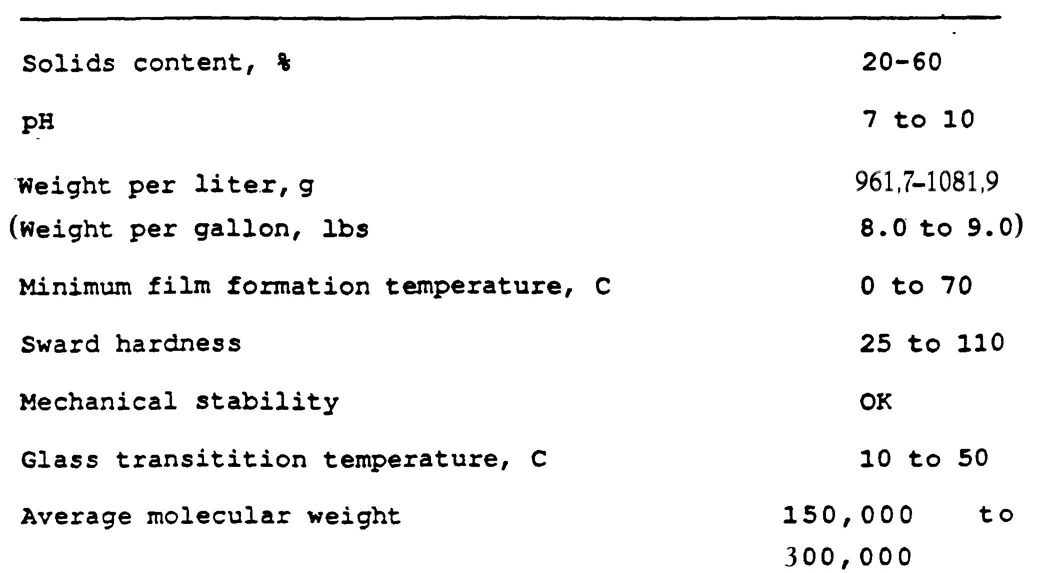

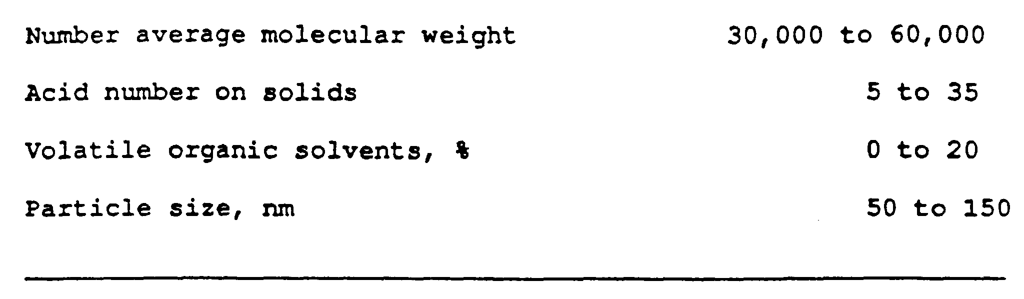

Especially preferred acrylic lattices are Neocryl® A-622, Neocryl® A-640, Neocryl® A-6037 sold by ICI Resins, Joncryl® J-537, Joncryl® J-538 sold by Johnson Wax, Arolon® 860-W-45 sold by NL Industries. The level of this resin in component C is 15-60% by weight, preferably 20-40% by weight. The organic, inorganic pigments and/or dyestuffs are ground with this resin employing standard techniques. Examples of dispersing equipment are ball mills, pebble mills, pearl mills, horizontal mills, and vertical mills. Examples of pigments and dyestuffs but not limited to are titanium dioxide, graphite, carbon black, zinc oxide, cadmium sulfide, chromium oxide, zinc sulfide, zinc chromate, strontium chromate, barium chromate, lead chromate lead cyanamide, lead silico chromate, chromium oxide, zinc sulfide, yellow nickel titanium, yellow chromium titanium, red iron oxide, transparent red iron oxide, transparent yellow oxide, black iron oxide, ultramarine blue, phthalocyanine complexes, amaranth, quinacridones, and halogenated thioindigo pigments. The level of pigment/dyestuff in component C is 0.0-45.0% by weight, typically 0-25%. This component may also contain a wax composed of ethylene and/or ethylenically unsaturated monomers alkyl (meth)acrylates such as methyl (meth)acrylate, ethyl (meth)acrylate, propyl (meth)acrylate, 2-propyl (meth)acrylate, butyl (meth) acrylate, 2-butyl (meth) acrylate, 2-methylpropyl (meth)acrylate, t-butyl (meth)acrylate, 2-ethylhexyl (meth)acrylate, cyclohexyl (meth)acrylate, lauryl (meth)acrylate, octyl (meth)acrylate, decyl (meth) acrylate, stearyl (meth)acrylate, dicyclopentadienyl (meth)acrylate, and isobornyl (meth)acrylate; aryl monomers such as styrene, alphamethyl styrene, vinyl toluene, t-butyl styrene, benzyl (meth)acrylate, and 2-benzylethyl (meth)acrylate; hydroxy monomers such as hydroxyethyl (meth)acrylate, hydroxypropyl (meth)acrylate, hydroxybutyl (meth)acrylate, sec-hydroxybutyl (meth) acrylate, and hydroxyoctyl (meth) acrylate; acid functional monomers such as acrylic acid, methacrylic acid, maleic acid, and itaconic acid. Typically, the particle size of the wax particle in the final dispersion is 0.5 µm (micron) to 50 µm (micron), preferably 1.0 µm (micron) to 20.0 µm (micron). Typical properties of this wax are as follows:

| | |
|---|---|
| Acid Number (mg KOH/g) | 0-50 |
| Hardness, dmm (ASTM D-5) | <2.0 |
| Mettler Drop Point, °C (ASTM D-3104) | 100-150 |
| Particle Size, µm (micron) | 0.5-10.0 |
| Hydroxyl Number | 0-50 |

Typically, the wax is dispersed by conventional techniques in to the resin system to the desired particle size. The proper amount of the wax dispersion is then added to the pigmented base. This component may also contain other conventional paint additives such as dispersing aids, anti-settling aids, wetting aids, thickening agents, extenders, plasticizers, stabilizers, light stabilizers, antifoams, defoamers and catalysts singly or a multitude of them at the conventional levels. Also present in this component is a water miscible solvent such as methyl ethyl ketone, acetone, ethanol, methanol, propanol, butanol, N-methylpyrolidone, glycols, glycol ethers, glycol acetates, diethylene glycol ethers, diethylene glycol acetates, propylene glycol ethers, propylene glycol acetates, dipropylene glycol ethers, dipropylene glycol acetates, specially preferred are ethylene glycol propyl ether, ethylene glycol butyl ether, ethylene glycol hexyl ether, propylene methyl ether, propylene ethyl ether, propylene propyl ether, propylene butyl ether, propylene hexyl ether, dipropylene methyl ether, dipropylene ethyl ether, dipropylene propyl ether and dipropylene butyl ether at a level of 0-25% by weight, preferably 0-12% by weight. This component may also contain a water reducible polyurethane at a level of 0.0-25.0% by weight, preferably 0.0-10.0% by weight. Examples of water reducible polyurethanes are NeoRez® R-960, R-966, R-967, R-9637 manufactured by ICI Resins and Spensol® L51 and L53 manufactured by NL Industries.

Component C, the pigmented base, has a total solids level of 5-60% by weight, a total pigment level of 0.0-45% by weight, a total organic solvent level of 0-25% by weight, a total binder of 20-60% by weight, a total wax level of 0-20% by weight, a total polyurethane level of 0-25% by weight, a total water level of 40-95% by wieght and a pH range of 7-9. The pH of the base can be adjusted using ammonia or other water soluble primary amines, secondary amines, tertiary amines, polyamines and hydroxyamines, such as ethanolamine, diethanolamine, triethanolamine, n-methylethanol amine, N,N diethylethanolamine, N-aminoethanolamine, N-methyldiethanolamine, monoisopropanolamine, diisopropanolamine, triisopropanolamine, hydroxyamine, butanolamine, hexanolamine, methyl diethanolamine, N,N-diethylaminoethylamine, ethylene diamine, diethylene triamine, diethylene tetraamine, hexamethylene tetramine, triethlamine, and the like.

Component D, reducer base, is an aqueous solution containing a dispersion of synthetic sodium lithium magnesium silicate hectorite clay. The hectorite clay may also contain an anionic surfactant, a polypropylene gylcol, and a water reducible polyurethane resin. Addition of the anionic surfactant results in the pregelling of the hectorite clay. Using the pregelled hectorite clay in a coating composition results in a drier film application and a stable viscosity. Addition of a polypropylene glycol to the hextorite clay results in a low viscosity dispersion. This low viscosity dispersion of the hextorite clay allows for easy incorporation of the dispersion into the paint composition. The polypropylene glycol also allows the coating to be sprayed wetter onto the substrate. The typical properties of the synthetic sodium lithium magnesium silicate clay are as follows:

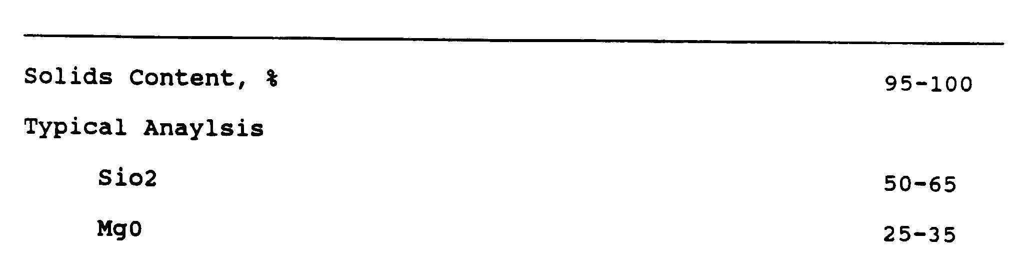

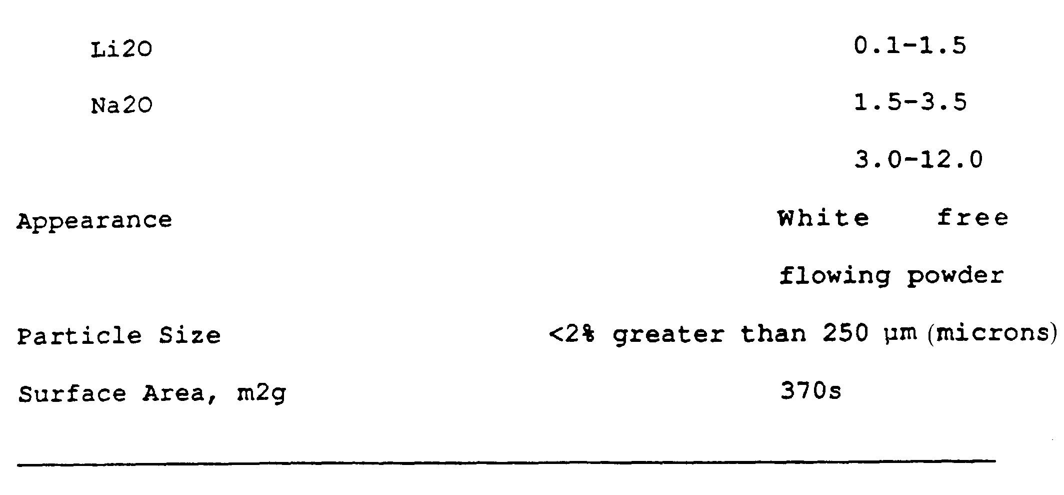

Especially preferred synthetic sodium lithium magnesium silicate hectorite clay is Laponite® RD, available from Laporte, Inc. This hectorite clay is present in this component at a level of 0.1-10% by weight, preferably 0.5-3.0% by weight. This component also contains a polypropylene glycol at a level of 0.1-10% by weight. The molecular weight range of the polypropylene glycol is 435 to 3900. The hectorite clay can be dispersed in the aqueous medium by Cowles or agitation. A water miscible solvent may also be present in this component such as methyl ethyl ketone, acetone, ethanol, methanol, propanol, butanol, N-methylpyrolidone, glycols, glycol ethers, glycol acetates, diethylene glycol ethers, diethylene glycol acetates, propylene glycol ethers, propylene glycol acetates, dipropylene glycol ethers, dipropylene glycol acetate acetate, specially preferred are ethylene propyl ether, ethylene glycol butyl ether, ethylene glycol hexyl ether, propylene methyl ether, propylene ethyl, propylene propyl ether, propylene butyl ether, propylene hexyl ether, dipropylene methyl ether, dipropylene ethyl ether, dipropylene propyl ether and dipropylene butyl ether at a level of 0-25% by weight, preferably 0-12% by weight. Component D has a total solids of 0.1-20.0% by weight and a total water level of 50-99.9% by weight.

Examples of anionic surfactants that can be employed are alcohol sulfates, ether sulfates, linear alkyl benzene sulfonates and especially preferred dialkyl sulfosuccinates. The cation of the salt may be ammonium, sodium, potassium, and other monovalent and/or divalent metals. The surfactant is present in this component at a level of 0.1-2.0% by weight, preferably 0.1-1.0% by weight. This component may also contain a water reducible polyurethane at a level of 0.0-25.0% by weight, preferably 0.0-10.0% by weight. Examples of commercial water reducible polyurethanes are NeoRez® R-960, R-967, R-9637 manufactured by ICI Resins and Spensol® L51 and L53 manufactured by NL Industries. Other water dispersible polyurethane resins also exhibit the same result. Also present in this component is a water miscible solvent such as methyl ethyl ketone, acetone, ethanol, methanol, propanol, butanol, N-methylpyrrolidone, glycols, glycol ethers, glycol acetates, diethylene glycol ethers, diethylene glycol acetates, propylene glycol ethers, propylene glycol acetates, dipropylene glycol ethers, dipropylene glycol acetates, specially peferred are ethylene glyocl propyl ether, ethylene glycol butyl ether, ethylene glycol hexyl ether, propylene methyl ether, propylene ethyl ether, propylene propyl ether, propylene butyl ether, propylene hexyl ether, dipropylene methyl ether, dipropylene ethyl ether, dipropylene propyl ether and dipropylene butyl ether at a level of 0.25% by weight preferably 0-12% by weight. The total water content of this component is 50-99.9% by weight.

Other water reducible resins may be added to the coating to improve certain film properties such as aqueous one-component aliphatic polyurethane dispersions, aromatic polyurethane dispersions, polyesters, and alkyds.

Addition of an acrylic acid and/or polyurethane based thickeners known to the art may also be added to achieve desired properties. The incorporation of metal salts such as zinc oxide or zinc acetate may also improve the humidity resistance of the final film.

Additional anionic and nonionic surfactants can be added to the paint composition to increase wetting of the substrate by the coating such as FC-120, FC-430 sold by 3M, Surfynol® 104, Surfynol® 440 sold by Air Products, Triton® X-100 sold by Rohm and Haas, Troysol® LAC sold by Troy Chemical Company, Aerosol OT's sold by American Cyanamid including the salts of dialkyl sulfosuccinates and Igepal's® sold by GAF including the ethoxylated alkyl phenols.

This base coat composition exhibits a very high viscosity at low shear rate while having a low viscosity at high shear rates. This phenomenon results in the outstanding metal effect this coating composition possesses. The efflux time of the coating through a #4 Ford cup is 15 to 30 seconds at 23 C.

The coating composition can be applied using conventional spray equipment or high volume low pressure spray equipment resulting in a high quality finish. Other modes of application are roller coating, brushing, sprinkling, flow coating, dipping, electrostatic spraying, or electrophoresis. Suitable substrates may be made of wood, metal, and synthetic material. After a flash off time of 15 to 45 minutes, a transparent top coat can be applied over this base coat. The preferred transparent clear coat is two component, based on acrylic and/or polyester resins cured with polyisocyanates. Other examples of cured transparent clear coats are acrylic and/or polyester resins cured with silanes, acrylic and/or polyester acid cured epoxy coatings, and acrylic and/or polyester resins cured with melamines, however, this is not an inclusive list.

### PREFERRED EMBODIMENTS OF INVENTION

The following examples illustrate the invention without limiting the scope thereof.

### Example 1: Base Coat Preparation

### Preparation of an Acrylic Polymer modified with A Glycidyl Ester of Tertiary C10 Fatty Acid.

A five liter three neck round-bottomed flask was fitted with an agitator, thermometer, condenser, nitrogen inlet and monomer inlet and charged with 680 g of methoxypropanol, 20 g of methyl ethyl ketone. The mixture was brought to reflux and the temperature adjusted to 140-141 C by adding 5.0 g of methyl ethyl ketone. A monomer solution was prepared containing 333 g of propenoic acid, 847 g of methyl-2-methyl-2-propionate, 450 g of 2-ethylhexyl-2-methylpropionate, 180 g of isobornyl-2-methyl-2-propionate and 27 g of Surfynol® 440. An initiator solution was also prepared containing 36 g of t-butyl peroxybenzoate and 76 g of methoxypropanol. The above monomer solution and initiator solutions were added to the reaction flask at a uniform rate over two hours. After completion of the additions, the monomer line was flushed with 35.0 g of methoxypropanol and a solution containing 15 g of t-butylperoxybenzoate and 40 g of methoxypropanol was then added over 10 minutes. The reaction was then refluxed for an additional 135 minutes. After refluxing, 475 g of a glycidyl ester of a tertiary C10 fatty acid was added to the flask, heated to reflux and reacted to constant acid value. The reaction was allowed to cool, then 43 g of methoxypropanol and 588 g of ethanol were added to the resin to reduce the viscosity. The properties of the resin are: viscosity Z5-Z6, solids 60-61%, and acid number of 53 to 56 based on solids.

### Preparation of Component A - Aluminum Base

The acrylic resin described above, 44.0 g, was added to 19.0 g of butoxyethanol. This mixture was stirred until a homogeneous solution was produced. A commercial solvent borne aluminum paste, 38.0 g was added to the resin solution. The resulting slurry was then stirred until a smooth, uniform slurry was produced. This aluminum base contains 49.8 % by weight of volatile organic solvents, 38.4 % by weight of solids, and 24.3 % by weight of aluminum flake.

### Preparation of Component B - Neutralization Base

To 300 g of deionized water, 8.0 g of 30 % aqueous ammonia was added. The solution was stirred well before adding 100.0 g of the acrylic resin described above. The resulting mixture was stirred until the solution was clear to slightly turbid. The nonvolatile level of this base was 14.8 % by weight, water level 74.9 % by weight, volatile organic solvent 9.8 % by weight. The final pH of this dispersion was 9.2.

### Preparation of Component C - Pigmented Base

The following pigment slurry was prepared, 12.2g of Neocryl® A-6037, 14.8g of NeoCryl® A-640, 0.3g of 30% aqueous ammonia, 3.2g of Perrindo® Maroon R-6424 manufactured by Mobay Corporation, 0.1g of a defoamer and 0.05g of Surfynol® 104BC manufactured by Air Products. The above mixture were mixed together and predispersed using a Cowles blade. The mixture was then ground on a sand mill until the desired particle size was achieved. A let down solution containing 29.5g of NeoCryl® A-622, 2.6g of butoxyethanol, 1.3g of deionized water and 0.03g of 1% aqueous solution of FC-120 was added to the grind portion under agitation. An unpigmented base can be prepared using the procedure above with the elimination of the Perrindo® Maroon R-6424 pigment. A wax dispersion was prepared by grinding 50.0g of a wax, 50.0g of unpigmented resin solution, 50.0 g of deionized water and 50.0g of butoxyethanol. This paste was ground to the desired particle size using conventional techniques. To the pigmented and unpigmented bases described above, 6.0g of this wax dispersion was added with stirring. Also added to the pigmented and unpigmented bases describee above was 16.0g of NeoRez® R-9637 manufactured by ICI Resins. The resulting pigmented base had a pH of 8.4, a solids level of 38.1% by weight, a volatile organic level of 10.5% by weight, a binder level of 34.2% by weight, a pigment level of 4.3% by weight and a water level of 51.4% by weight. The unpigmented base has a solid level of 35.4% by weight, volatile organic level of 9.5% by weight, a water level of 55.1% by weight and a pH of 8.5.

### Preparation of Component D - Reducer Base

To 1833.5g of deionized water, 47.5g of Laponite® RD manufactured by Laporte Industries and 19.0g of Pluracol® P101 manufactured by BASF Corporation was added. The resulting solution was then agitated for one hour until the Laponite® RD was completely dispersed. To this solution was added 1753.0g of deionized water. The resulting mixture had a Laponite® RD level of 1.3% by weight and a polypropylene glycol level of 0.5% by weight.

### Example 2

Example 1 was repeated except the following component was used as the reducer base (D).

To 1833.5g of deionized water, 37.6g of Laponite® RD manufactured To 1833.5g of deionized water, 37.6g of Laponite® RD manufactured by Laporte Industries was added. The resulting solution was then agitated for one hour until the Laponite® RD was completely then agitated for one hour until the Laponite® RD was completely dispersed. To this solution was added 1880.5g of deionized water and 9.4g of Troysol® LAC manufactured by Troy Chemical Company. To this Laponite® RD dispersion was added 644.3g of NeoRez® R-9637 manufactured by ICI Resins. The resulting mixture had a Laponite® RD level of 0.81% by weight, Troysol® LAC level of 0.20% by weight, water dispersible polyurethane level of 6.0% by weight and a volatile organic level of 1.9% by weight.

### EXAMPLE 3 - PREPARATION OF A WATER BORNE RED METALLIC BASE

| COAT | |
|---|---|
| Component | Parts by Weight |
| Component B | 32.0 |
| Neutralization Base | |
| | |
| Component A | 16.0 |
| Aluminum Base | |
| | |
| Component C | 54.0 |
| Pigmented Base | |
| | |
| Component D of Example 1 | 44.0 |
| Reducer Base | |

The above formula was used to prepare a red metallic base coat. The order of addition is that listed. After each introduction of a component, the entire solution was stirred. The base coat was sprayed on panels primed with an epoxy primer. The base coat was sprayed on the substrate using conventional spray equipment until hiding was achieved. The base coat was allowed to flash for 30 minutes and then clear coated with a transparent coating based on isocyanate technology. The final properties of the base coat after coating with a conventual polyurethane clear coat are listed below, including appearance ratings.

| Properties of the Red Metallic Base Coat and Base Coat, Clear Coat System | |
|---|---|
| Property | Value |
| Water | 65.7 % |
| Volatile Organic | 11.5 % |
| Pigment | 4.2 % |
| Nonvolatile | 24.0 % |
| Binder | 19.8 % |
| Weight per Gallon (lbs/gal) | 8.3 |
| VOC (lbs/gal) | 2.8 |
| Gloss, 20 deg | 89 |
| DOI | 90 |
| Adhesion | good |
| Film Thickness (mil) | 0.35 |
| Humidity | good |
| Water Spray | excell. |

### EXAMPLE 4 - Preparation of a Water Borne Silver Metallic Base Coat

| | |
|---|---|
| Component B | 32.0g |
| Neutralization Base | |
| | |
| Component A | 16.0g |
| Aluminum Base | |
| | |
| Component C | 54.0g |
| Unpigmented Base | |
| | |
| Component D | 44.0g |
| Reducer Base of Example 1 | |

The above formula was used to prepare a silver metallic base coat. The order of addition is that listed. After each introduction of a component, the entire solution was stirred. The base coat was sprayed on panels primed with an epoxy primer. The base coat was sprayed on the substrate using conventional spray equipment until hiding was achieved. The base coat was allowed to flash for 30 minutes and then clear coated with a transparent coating based on isocyanate technology.

### EXAMPLE 5 - Preparation of a Water Borne Silver Metallic Base Coat

| | |
|---|---|
| Component B | 32.0g |
| Neutralization Base | |
| | |
| Component A | 16.0g |
| Aluminum Base | |
| | |
| Component C | 44.0g |
| Unpigmented Base | |
| | |
| Component D of Example 2 | 54.0g |
| Reducer Base | |

The above formula was used to prepare a silver metallic base coat. The order of addition is that listed. After each introduction of a component, the entire solution was stirred. The base coat was sprayed on panels primed with an epoxy primer. The base coat was sprayed on the substrate using conventional spray equipment until hiding was achieved. The base coat was allowed to flash for 30 minutes and then clear coated with a transparent coating based on isocyanate technology.

### Example 6

Example I was repeated except the following component was used as the reduced base (D) and the following component was used as the pigment base (C).

### Preparation of Component C - Pigmented Base

The following pigment slurry was prepared, 12.2g of NeoCryl® A-6037, 14.8g of NeoCryl® A-640, 0.3g of 30% aqueous ammonia, 3.2g of Perrindo® Maroon R-6424 manufactured by Mobay Corporation, O.lg of a defoamer and 0.05g of Surfynol® 104BC manufactured by Air Products. The above mixture were mixed together and predispersed using a Cowles blade. The mixture was then ground on a sand mill until the desired particle size was achieved. A let down solution containing 29.5g of NeoCryl® A-622, 2.6g of butoxyethanol, 1.3g of deionized water and 0.03g of 1% aqueous solution of FC-120 was added to the grind portion under agitation. An unpigmented base can be prepared using the procedure above with the elimination of the Perrindo® Maroon R-6424 pigment. A wax dispersion was prepared by grinding 50.0g of a wax, 50.0g of unpigmented resin solution, 50.0 g of deionized water and 50.0g of butoxyethanol. This paste was ground to the desired particle size using conventional techniques. To the pigmented and unpigmented bases described above, 6.0g of this wax dispersion was added with stirring. The resulting pigmented base had a pH of 8.6, a solids level of 37.8% by weight, a volatile organic level of 10.6% by weight, a binder level of 33.3% by weight, a pigment level of 5.0% by weight and a water level of 51.6% by weight. The unpigmented base has a solid level of 34.7% by weight, volatile organic level of 9.4% by weight, a water level of 55.9% by weight and a pH of 8.7.

### Preparation of Component D - Reducer Base

To 1833.5g of deionized water, 37.6g of Laponite® RD manufactured by Laporte Industries was added. The resulting solution was then agitated for one hour until the Laponite® RD was completely dispersed. To this solution was added 1880.5g of deionized water and 9.4g of Troysol® LAc manufactured by Troy Chemical Company. To this Laponite® RD dispersion was added 644.3g of NeoRez® R-9637 manufactured by ICI Resins. The resulting mixture had a Laponite® RD level of 0.81% by weight, Troysol® LAC level of 0.20% by weight, water dispersible polyurethane level of 6.0% by weight and a volatile organic level of 1.9% by weight.

| PREPARATION OF A WATER BORNE RED METALLIC BASE COAT | |
|---|---|
| Component | Parts by Weight |
| Component B | 32.0 |
| Neutralization Base | |
| | |
| Component A | 16.0 |
| Aluminum Base | |
| | |
| Component C of example 6 | 44.0 |
| Pigmented Base | |
| | |
| Component D of example 6 | 54.0 |
| Reducer Base | |

The above formula was used to prepare a red metallic base coat. The order of addition is that listed. After each introduction of a component, the entire solution was stirred. The base coat was sprayed on panels primed with an epoxy primer. The base coat was sprayed on the substrate using conventional spray equipment until hiding was achieved. The base coat was allowed to flash for 30 minutes and then clear coated with a transparent coating based on isocyanate technology. The final properties of the base coat after coating with a conventual polyurethane clear coat are listed below, including appearance ratings.

| Properties of the Red Metallic Base Coat and Base Coat, Clear Coat System | |
|---|---|
| Property | Value |
| Water | 65.7 % |
| Volatile Organic | 11.5 % |
| Pigment | 4.2 % |
| Nonvolatile | 24.0 % |
| Binder | 19.8 % |
| Weight per Gallon (lbs/gal) | 8.3/336 g/l |
| VOC (lbs/gal) | 2.8/113 g/l |
| Gloss, 20 deg | 89 |
| DOI | 90 |
| Adhesion | good |
| Film Thickness (mil) | 0.35/8.9 µm |
| Humidity | good |
| Water Spray | excell. |
| Metal Control | excell. |

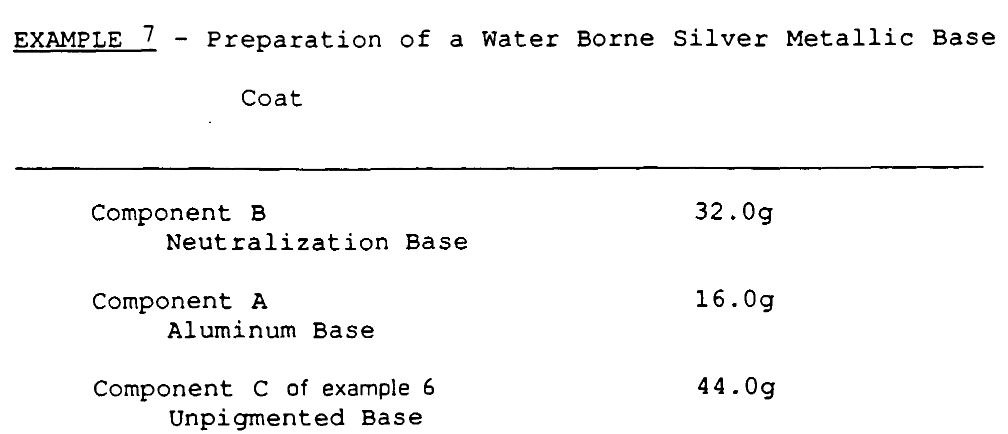

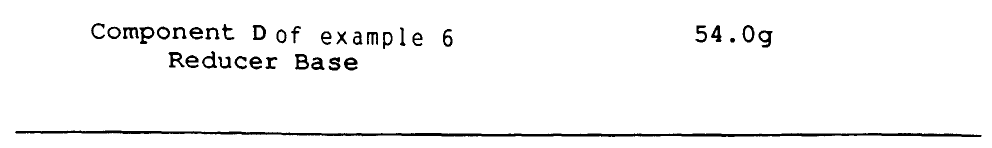

The above formula was used to prepare a silver metallic base coat. The order of addition is that listed. After each introduction of a component, the entire solution was stirred. The base coat was sprayed on panels primed with an epoxy primer. The base coat was sprayed on the substrate using conventional spray equipment until hiding was achieved. The base coat was allowed to flash for 30 minutes and then clear coated with a transparent coating based on isocyanate technology. The final properties of the base coat after coating with a conventional polyurethane clear coat are listed below, including appearance ratings.

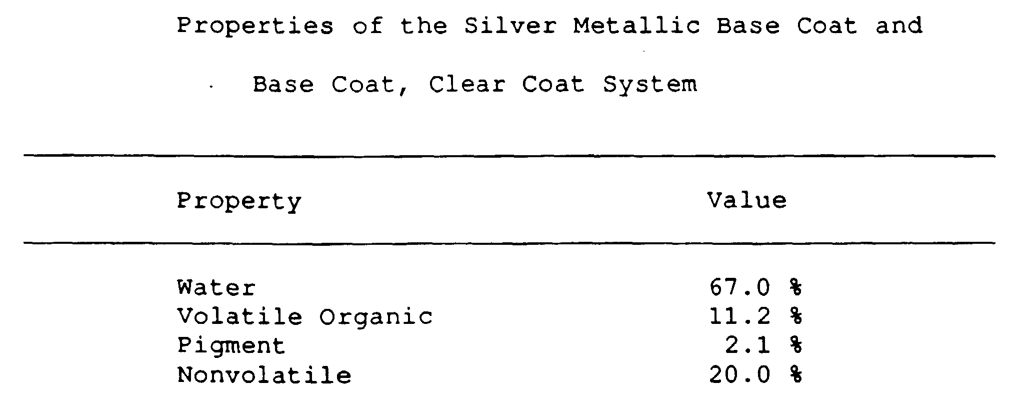

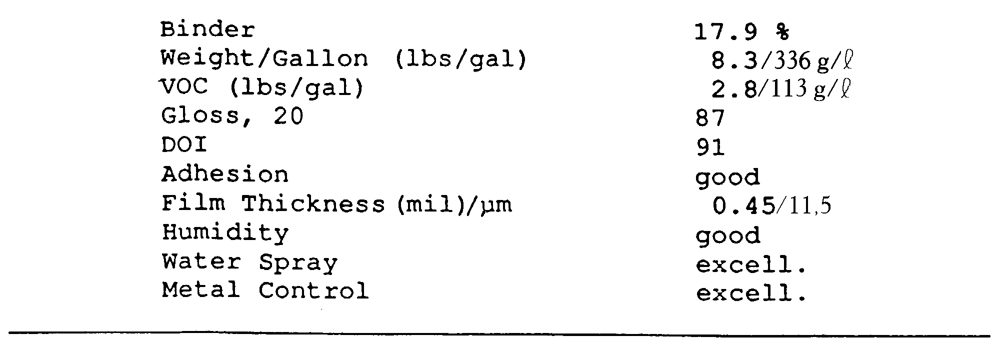

## Claims

1. Kit compositions for the preparation of waterborne coating compositions comprising
A) a slurry of metallic pigment flakes in a solvent borne resin and water miscible solvent(s),
B) an aqueous neutralization base containing a water reducible resin,
C) an aqueous pigmented or unpigmented base containing an acrylic latex resin and,
D) a reducer base containing a rheology control agent excluding a polymeric nonionic fluorocarbon surfactant with a weight average molecular weight of 5,000 to 50,000 containing ethylene oxide linkages and 2 - 25% of fluorine by weight of the surfactant.

2. Kit compositions according to claim 1 characterized in that component A contains a water reducible acrylic, water reducible polyester, or water reducible alkyd resin.

3. Kit compositions according to claims 1 or 2 characterized in that component B contains a solvent borne water reducible resin, neutralized with ammonia or a water soluble primary amine, secondary amine, tertiary amine, polyamine or hydroxyamine.

4. Kit compositions for the preparation of waterborne coating compositions comprising
C) an aqueous pigmented base containing an acrylic latex resin and,
D) a reducer base containing a rheology control agent excluding a polymeric nonionic fluorocarbon surfactant with a weight average molecular weight of 5,000 to 50,000 containing ethylene oxide linkages and 2 - 25% of fluorine by weight of the surfactant.

5. Kit compositions according to any one of claims 1 to 4 characterized in that component C has a total solids level of 5 - 60% by weight, a pH range of 7 - 10 and contains
- an acrylic latex having a solids level of 20 - 60 % by weight and a glass transition temperature of 10 to 50°C
- water miscible solvent at a level of 0 - 25% by weight,
- organic/inorganic pigments and/or organic/inorganic dyestuffs at a level of 0.0 - 45.0% by weight
- a wax having an acid number of 0 - 50, vinyl acetate at a level of 0 - 20% by weight and a particle size of 0.5 - 50.0 microns at a level of 0 - 20% by weight and
- water at a level of 40 - 95% by weight.

6. Kit compositions according to any one of claims 1 to 5 characterized in that component D contains
- a synthetic sodium lithium magnesium silicate hectorite clay at a level of 0.1 - 10% by weight,
- an anionic surfactant at a level of 0.1 - 2.0% by weight,
- a water reducible polyurethane at a level of 0 - 25% by weight and
- a water miscible solvent at a level of 0 - 25% by weight.

7. Kit compositions according to any one of claims 1 to 5 characterized in that component D contains
- a synthetic sodium lithium magnesium silicate hectorite clay at a level of 0.1 - 10% by weight,
- a polypropylene glycol at a level of 0.1 - 10% by weight and
- a water miscible solvent at a level of 0 - 25% by weight.

## Patentansprüche

1. Mehrkomponentensysteme zur Herstellung von wäßrigen Lackzusammensetzungen, enthaltend
A) eine Aufschlämmung von Metallpigmentflakes in einem lösungsmittelhaltigen Harz und einem oder mehreren mit Wasser mischbaren Lösungsmitteln,
B) eine wäßrige Neutralisationsbasis, enthaltend ein wasserverdünnbares Harz,
C) eine wäßrige pigmentierte oder nicht pigmentierte Basis, enthaltend ein Acryllatexharz, und
D) eine Verdünnerbasis, enthaltend ein rheologiesteuerndes Mittel, wobei ein polymerer nichtionischer Fluorkohlenwasserstoff als oberflächenaktive Substanz mit einem mittleren Molekulargewicht von 5.000 bis 50.000, enthaltend Ethylenoxid-Bindungen und 2-25 Gew.-% Fluor, bezogen auf das Gewicht des oberflächenaktiven Mittels, ausgeschlossen ist.

2. Mehrkomponentensysteme nach Anspruch 1, dadurch gekennzeichnet, daß die Komponente A wasserverdünnbares Acrylharz, einen wasserverdünnbaren Polyester oder ein wasserverdünnbares Alkydharz enthält.

3. Mehrkomponentensysteme nach Anspruch 1 oder 2, dadurch gekennzeichnet, daß Komponente B ein lösungsmittelhaltiges, wasserverdünnbares, mit Ammoniak oder einem wasserlöslichen primären Amin, sekundären Amin, tertiären Amin, Polyamin oder Hydroxyamin neutralisiertes Harz enthält.

4. Mehrkomponentensysteme zur Herstellung von wäßrigen Lackzusammensetzungen, enthaltend
C) eine wäßrige pigmentierte Basis, enthaltend ein Acryllatexharz, und
D) eine Verdünnerbasis, enthaltend ein rheologiesteuerndes Mittel, wobei ein polymerer nichtionischer Fluorkohlenwasserstoff als oberflächenaktive Substanz mit einem mittleren Molekulargewicht von 5.000 bis 50.000, enthaltend Ethylenoxid-Bindungen und 2-25 Gew.-% Fluor, bezogen auf das Gewicht des oberflächenaktiven Mittels, ausgeschlossen ist.

5. Mehrkomponentensysteme nach einem der Ansprüche 1 bis 4, dadurch gekennzeichnet, daß die Komponente C einen Gesamtfeststoffgehalt von 5 - 60 Gew.-% und einen pH-Wert-Bereich von 7 - 10 aufweist und
- einen Acryllatex mit einem Feststoffgehalt von 20 - 60 Gew.-% und einer Glasübergangstemperatur von 10 bis 50°C,
- 0-25 Gew.-% mit Wasser mischbares Lösungsmittel,
- 0,0 - 45,0 Gew.-% organische/anorganische Pigmente und/oder organische/anorganische Farbstoffe,
- 0 - 20 Gew.-% eines Wachses mit einer Säurezahl von 0 - 50, 0 - 20 Gew.-% Vinylacetat und einer Teilchengröße von 0,5 - 50,0 Mikron und
- 40 - 95 Gew.-% Wasser
enthält.

6. Mehrkomponentensysteme nach einem der Ansprüche 1 bis 5, dadurch gekennzeichnet, daß die Komponente D
- 0,1 - 10 Gew.-% eines synthetischen Natriumlithiummagnesiumsilicat-Hectorittons,
- 0,1 - 2,0 Gew.-% einer anionischen oberflächenaktiven Substanz,
- 0 - 25 Gew.-% eines wasserverdünnbaren Polyurethans und
- 0 - 25 Gew.-% eines mit Wasser mischbaren Lösungsmittels
enthält.

7. Mehrkomponentensysteme nach einem der Ansprüche 1 bis 5, dadurch gekennzeichnet, daß die Komponente D
- 0,1 - 10 Gew.-% eines synthetischen Natriumlithiummagnesiumsilicat-Hectorittons,
- 0,1 - 10 Gew.-% eines Polypropylenglykols und
- 0 - 25 Gew.-% eines mit Wasser mischbaren Lösungsmittels
enthält.

## Revendications

1. Compositions à kit pour la préparation de compositions de revêtement aqueuses comprenant
A) une bouillie de paillettes de pigment métallique dans une résine en phase solvant et un (des) solvant(s) miscible(s) à l'eau,
B) une base de neutralisation aqueuse contenant une résine réductible par l'eau,
C) une base pigmentée ou non pigmentée aqueuse contenant une résine de latex acrylique et,
D) une base réductrice contenant un agent de régulation de la rhéologie à l'exclusion d'un tensio-actif fluorocarboné non ionique polymère, ayant un poids moléculaire moyen en poids de 5 000 à 50 000, contenant des liaisons oxyde d'éthylène et 2-25% de fluor en poids du tensio-actif.

2. Compositions à kit selon la revendication 1, caractérisées en ce que le composant A contient un acrylique réductible par l'eau, un polyester réductible par l'eau ou une résine alkyde réductible par l'eau.

3. Compositions à kit selon les revendications 1 ou 2, caractérisées en ce que le composant B contient une résine réductible par l'eau en phase solvant, neutralisée avec de l'ammoniac ou une amine primaire, amine secondaire, amine tertiaire, polyamine ou hydroxyamine hydrosoluble.

4. Compositions à kit pour la préparation de compositions de revêtement aqueuses comprenant
C) une base pigmentée aqueuse contenant une résine de latex acrylique et,
D) une base réductrice contenant un agent de régulation de la rhéologie à l'exclusion d'un tensio-actif fluorocarboné non ionique polymère, ayant un poids moléculaire moyen en poids de 5 000 à 50 000, contenant des liaisons oxyde d'éthylène et 2-25% de fluor en poids du tensio-actif.

5. Compositions à kit selon l'une quelconque des revendications 1 à 4, caractérisées en ce que le composant C a une teneur totale en matières solides de 5-60% en poids, une gamme de pH de 7-10 et contient
- un latex acrylique ayant une teneur en matières solides de 20-60% en poids et une température de transition vitreuse de 10 à 50°C
- un solvant miscible à une teneur de 0-25% en poids,
- des pigments organiques/inorganiques et/ou des colorants organiques/inorganiques à une teneur de 0,0-45,0% en poids,
- une cire ayant un indice d'acide de 0-50, de l'acétate de vinyle à une teneur de 0-20% en poids et une taille de particule de 0,5-50,0 microns, à une teneur de 0-20% en poids, et
- de l'eau à une teneur de 40-95% en poids.

6. Compositions à kit selon l'une quelconque des revendications 1 à 5, caractérisées en ce que le composant D contient
- une argile hectorite synthétique de silicates de sodium-lithium-magnésium à une teneur de 0,1-10% en poids,
- un tensio-actif anionique à une teneur de 0,1-2,0% en poids,
- un polyuréthane réductible par l'eau à une teneur de 0-25% en poids et
- un solvant miscible à l'eau à une teneur de 0-25% en poids.

7. Compositions à kit selon l'une quelconque des revendications 1 à 5, caractérisées en ce que le composant D contient
- une argile hectorite synthétique de silicates de sodium-lithium-magnésium à une teneur de 0,1-10% en poids,
- un polypropylèneglycol à une teneur de 0,1-10% en poids et
- un solvant miscible à l'eau à une teneur de 0-25% en poids.
